# EUROPÄISCHE PATENTSCHRIFT

(11) **EP 1 795 885 B1**
(45) Veröffentlichungstag und Bekanntmachung des Hinweises auf die Patenterteilung: **05.10.2011**
(21) Anmeldenummer: 06090218.6
(22) Anmeldetag: 07.12.2006
(51) Int. Cl.: G01N 9/36

(54) **Verfahren und Vorrichtung zur Messung der Dichte eines landwirtschaftichen Gutes**
Method and apparatus for measuring the density of an agricultural product
Procédé et moyen de mesure de la densité d'un produit agricole

(30) Priorität: 07.12.2005 EP 05090334
(43) Veröffentlichungstag der Anmeldung: 13.06.2007
(73) Patentinhaber: Leibniz-Institut für Agrartechnik Potsdam-Bornim e.V., 14469 Postdam-Bornim (DE)
(72) Erfinder: Fürll, Christian, Prof. Dr.-Ing. habil, 14469 Postdam (DE); Schemel, Hartmut, Dr.-Ing., 14822 Brück (DE)
(74) Vertreter: Schubert, Klemens

(56) Entgegenhaltungen:
- EP-A- 0 843 959
- DE-A1- 10 306 725
- DE-C1- 10 236 515

## Beschreibung

Die Erfindung betrifft ein Verfahren zur Messung der mechanischen Verdichtung in der Tiefe eines landwirtschaftlichen Gutes sowie eine Vorrichtung zur Durchführung des Verfahrens.

Landwirtschaftliche Güter, wie zum Beispiel zerkleinerte Getreide- und Maiskörner oder gehäckseltes Grüngut, können durch Verdichtung und damit Verringerung des eingeschlossenen Luftvolumens konserviert werden. Im großen Umfang angewendet wird das Verfahren zum Beispiel bei der Silierung von gehäckseltem Mais oder Gras in Horizontalsilos. Dabei wird Grünguthäcksel lagenweise in ein Silo eingebracht und durch Überfahren mit einem Traktor, Radlader oder einer Walze verdichtet. Die Qualität des konservierten Futters und die Lagerungsverluste werden entscheidend von der Verdichtung und dem Erreichen einer Mindestlagerungsdichte bestimmt.

Vorwiegend für Forschungszwecke werden Verfahren angewendet, bei denen mit speziellen Messgeräten punktuell und diskontinuierlich Messungen vorgenommen werden. Dies ist mit radiometrischen Sonden möglich, die in das Gut mindestens 20 cm tief eingesteckt werden. In der Praxis werden auch Einstechzylinder verwendet, mit denen ein definiertes Volumen des Gutes entnommen und zur Berechnung der Dichte verwogen wird. Beide Verfahren sind derart aufwendig oder risikobehaftet, dass in der Regel auf eine Dichtemessung verzichtet wird. Stattdessen findet bestenfalls eine visuelle Beurteilung anhand der Einsinktiefe des Verdichtungsfahrzeuges statt, die jedoch eine quantitative Aussage nicht zulässt.

Bekannt sind Messeinrichtungen an Verdichtungswalzen für die Herstellung von Bauuntergründen, zum Beispiel im Straßenbau. Hierbei wird ein Beschleunigungssensor verwendet, der mit der Vibrationswalze der Maschine verbunden ist. Auf einem durch eine bestimmte Zusammensetzung definierten Untergrund, mit vorher messtechnisch ermittelter Verdichtung, liefert er ein Referenzsignal, das denn als Zielvorgabe für die gesamte Fläche des gleichen Untergrundes dient. Dieser Referenzwert wird dem Fahrer auf verschiedene Weise in der Kabine des Verdichtungsfahrzeugs angezeigt. Das Verfahren hat den Nachteil, dass die Dichte nicht direkt gemessen wird. Außerdem kann es nur für vibrierende Maschinen mit konstanter Eigenfrequenz angewendet werden.

In der DE 102 36 515 und der EP 0 843 959 werden Messeinrichtungen zur Bestimmung von Inhaltsstoffen und/oder Eigenschaften von Erntegut in einer landwirtschaftlichen Maschine beschrieben. Eine Messung der Verdichtung eines Untergrundes in der Tiefe ist jedoch nicht beschrieben.

Weiterhin wird in der DE 103 06 725 ein Verfahren und eine Vorrichtung zur Bestimmung von Erntegutparametern, mit einer während des Arbeitsprozesses mit einer Erntegutprobe befüllbaren Verdichtungseinrichtung beschrieben. In der Verdichtungseinrichtung wird eine aus dem Gutstrom separierte Teilmenge auf einen bestimmten Wert verdichtet, um den Dichteeinfluss auf die zu messenden Gutparameter auszuschließen. Die Messung der Erntegutparameter erfolgt in einer für die Aufnahme von Proben bestimmten Verdichtungskammer. Hierbei dient die Herstellung einer konstanten Dichte als Mittel, um andere von der Dichte abhängige Gutparameter eindeutig quantifizieren zu können. Die Dichte wird hierbei aus dem Kammervolumen und dem eingeschlossenen Gutgewicht bestimmt und es handelt sich um keine messtechnische Erfassung der Dichte eines Untergrundes während des Überfahrens.

Die DE 297 23 171 U1 beschreibt eine Walzeneinrichtung zur Verdichtung von Asphaltdecken. Hierbei werden zwei Sensoren verwendet, welche in der Walzenspur und außerhalb der Walzenspur die Verdichtung relativ zueinander Messen und bei Unterschreitung des vorgegeben Grenzwertes der Differenz ein Signal erzeugen. Eine Dichtemessung in der Tiefe des Gutes in Form von absoluten Werten wird nicht offenbart.

Aufgabe der vorliegenden Erfindung ist die Messung der mechanischen Verdichtung in der Tiefe eines landwirtschaftlichen Gutes, um eine optimale Konservierung des landwirtschaftlichen Gutes zu ermöglichen.

Die Aufgabe der vorliegenden Erfindung wird durch ein Verfahren mit den Merkmalen des Hauptanspruchs gelöst.

Unter landwirtschaftlichem Gut werden alle Arten von Agrarprodukten, wie zum Beispiel erntefeuchtes Getreide und Maiskörner, Futtermittel oder gehäckseltes Grüngut, verstanden.

Landwirtschaftliches Gut, das in Silos, insbesondere Horizontalsilos, auf Freiflächen, oder in Hallen lagert, wird zur Konservierung verdichtet. Dabei wird das landwirtschaftliche Gut lagenweise in das Silo eingebracht. Durch Überfahren mit einem Verdichtungsfahrzeug, wie zum Beispiel einem Traktor, einer Walze, einem Radlader oder einem anderen geeigneten Fahrzeug, wird das landwirtschaftliche Gut verdichtet. Durch diesen Verdichtungsprozess wird das eingeschlossene Luftvolumen verringert und damit das Gut konserviert. Die Qualität des konservierten Gutes und die Lagerungsverluste werden entscheidend von der Verdichtung und der Erreichung einer Mindestlagerungsdichte bestimmt. Nur wenn die Dichte während des Verdichtungsvorgangs gemessen und angezeigt werden kann, ist es dem Fahrer/Bediener einer Verdichtungsapparatur möglich, die notwendige Lagerungsdichte mit minimalem Aufwand zu erreichen.

Die Messdaten des Dichtesensors leitet man an eine Auswerteeinheit weiter und stellt sie auf einer Anzeigeeinheit dar. Die Dichte des landwirtschaftlichen Gutes wird online gemessen, d.h. zeitgleich mit dem Verdichten des landwirtschaftlichen Gutes werden die durch die Messsensoren genommenen Werte an die Auswerteeinheit und von dort an die Anzeigeeinheit weitergeleitet. Der Benutzer einer Verdichtungsapparatur erhält somit während des Verdichtens eine aktuelle Information über die Dichte des landwirtschaftlichen Gutes, das er gerade verdichtet. Dies ermöglicht es ihm, während des Verdichtens zu entscheiden, ob das Gut einer weiteren Verdichtung bedarf.

Die Messung erfolgt dabei sowohl kontinuierlich als auch diskontinuierlich. Bei einer kontinuierlichen Messung werden permanent Messwerte genommen und an die Auswerteeinheit weitergeleitet. Es ist aber auch möglich, beziehungsweise durch die Bauart oder Anbringung des Messsensors bedingt, dass die Messwerte nur in bestimmten Intervallen gemessen werden können. Bei der diskontinuierlichen Messung werden verschiedene Messpunkte festgelegt, an denen eine Messung erfolgt. Die ermittelten Daten werden aber auch hier, zeitgleich mit der Messung an die Auswerteeinheit weitergeleitet.

Die Dichte wird bevorzugt an der Oberfläche des landwirtschaftlichen Gutes gemessen. Dabei wird die Dichte bis in eine Tiefe von ca. 30 cm gemessen. Der Dichtesensor wird berührungslos über die Oberfläche geführt, er kann aber auch mit der Oberfläche in Kontakt gebracht werden. Die berührungslose Messung hat den Vorteil, dass die Messeinheiten besser vor Verschmutzung oder Beschädigungen geschützt sind.

Für jede Art von landwirtschaftlichem Gut, gibt es eine spezifische Dichte, bei der das Gut optimal konserviert wird. Das landwirtschaftliche Gut wird so lange weiter verdichtet, bis dieser Dichte, d.h. der gewünschte Soll-Wert, erreicht wird.

Wichtig ist die Verdichtung der Oberfläche des landwirtschaftlichen Gutes. Ist die obere Schicht des Gutes verdichtet, wird es Gasen aus unteren Schichten erschwert aus dem landwirtschaftlichen Gut zu entweichen, wodurch eine optimale Konservierung des Gutes erreicht wird. Die unteren Schichten des Gutes werden durch das Gewicht der über ihnen gelagerten Schichten verdichtet.

In einer bevorzugten Ausführungsform der Erfindung vergleicht man in der Auswerteeinheit die vom Dichtesensor gemessenen Werte mit dem Soll-Wert des landwirtschaftlichen Gutes und leitet die Abweichung zwischen den Werten an die Anzeigeeinheit weiter. Durch dieses Verfahren wird es dem Fahrer eines Verdichtungsfahrzeuges oder einer anderen Verdichtungsapparatur ermöglicht, beim Verdichten eine online-Dichtemessung durchzuführen. Er ist somit zeitgleich mit dem Überfahren des landwirtschaftlichen Gutes über dessen Beschaffenheit informiert und ist somit in der Lage zu entscheiden, ob die von ihm bearbeite Stelle des landwirtschaftlichen Gutes einer weiteren Verdichtung bedarf.

Der Soll-Wert eines landwirtschaftlichen Gutes ist jedoch auch abhängig von der Feuchtigkeit des Gutes. Deshalb misst man mit einem weiteren Sensor die Feuchtigkeit des landwirtschaftlichen Gutes und leitet die Messwerte der Feuchtigkeitsbestimmung an die Auswerteeinheit weiter. Der Feuchtigkeitssensor kann in dem Sensor für die Dichtemessung integriert sein oder ein eigenständiger Sensor sein. Bei der Messung kann der Feuchtigkeitssensor in Kontakt mit dem landwirtschaftlichen Gut gebracht werden. Es ist aber auch möglich, dass die Feuchtigkeitsmessung berührungslos vorgenommen wird, d.h. dass der Feuchtigkeitssensor bei der Messung ohne Kontakt zur Oberfläche des landwirtschaftlichen Gutes über diese hinweggeführt wird.

In einer weiteren bevorzugten Ausführungsform der Erfindung vergleicht man in der Auswerteeinheit die Messwerte mit dem Soll-Wert des landwirtschaftlichen Gutes unter Berücksichtigung der Feuchtigkeit des landwirtschaftlichen Gutes und leitet die Abweichung an die Anzeigeeinheit weiter.

Vorzugsweise bestimmt man die Position, an der ein Messwert genommen wird und leitet diese Positionswerte an die Auswerteeinheit weiter. Dadurch, dass man nicht nur die Dichte allein misst, sondern auch gleichzeitig die Position bestimmt, an der die Dichtebestimmung stattgefunden hat, ist es möglich die Oberfläche des landwirtschaftlichen Gutes zu kartographieren. Hierdurch wird dem Benutzer ein Überblick über das gesamte zu verdichtende landwirtschaftliche Gut ermöglicht. Ferner werden ihm die Stellen aufgezeigt, die einer weiteren Verdichtung bedürfen.

Die Anzeigeeinheit gibt vorzugsweise die Dichte des landwirtschaftlichen Gutes akustisch wieder und/oder stellt sie visuell dar. Die Anzeigeeinheit stellt somit eine Schnittstelle zwischen der Auswerteeinheit und dem Benutzer dar. Sie ermöglicht es ihm die gewonnenen Daten zu betrachten. Dabei wird dem Benutzer ein Übersichtsbild dargestellt, aus dem er alle für ihn wichtigen Daten über die Position, die Dichte des landwirtschaftlichen Gutes und die Feuchtigkeit des landwirtschaftlichen Gutes sowie die für dieses landwirtschaftliche Gut optimale Verdichtung, entnehmen kann. Diese Daten können durch eine entsprechende Software benutzerfreundlich aufbereitet werden. Dies kann in Form von Einzelwerten, Tabellen, Diagrammen oder ähnlichem geschehen. Es ist jedoch auch möglich dem Benutzer eine Übersichtskarte der Oberfläche des landwirtschaftlichen Gutes in einem Silo aufzuzeigen, in der die Verdichtung des Gutes durch spezielle, den einzelnen Dichtewerten zugeordneten Farben, dargestellt wird.

Die gemessenen Werte können aber auch in akustischer Form wiedergegeben werden, beispielsweise durch ein Signal, welches beim Erreichen der erforderlichen Dichte ertönt.

Des Weiteren wird die Aufgabe der Erfindung durch eine Vorrichtung mit den Merkmalen des unabhängigen Vorrichtungsanspruchs gelöst, die aus mindestens einem Messsensor und mindestens einer Anzeigeeinheit, die mit einer Auswerteeinheit verbunden sind, besteht. Dabei liefert der Messsensor beim Verdichten des landwirtschaftlichen Gutes Messwerte, die an die Auswerteeinheit weitergeleitet werden. In der Auswerteeinheit werden die Messwerte aufbereitet, dass heißt durch eine Software ausgewertet. So können in der Auswerteeinheit die gemessenen Werte mit Soll-Werten, wie zum Beispiel die für die Konservierung optimale Dichte, verglichen werden. Diese aufbereiteten Daten werden dann an die Anzeigeeinheit weitergeleitet.

Die Übertragung der gemessenen Werte kann dabei durch eine direkte Verbindung über ein Kabel oder aber durch eine kabellose Verbindung wie zum Beispiel eine Funkverbindung oder dergleichen hergestellt werden.

Die Auswerteeinheit kann in den Messsensor oder in die Anzeigeeinheit integriert werden oder als separate Baugruppe vorliegen.

Die Auswerteeinheit kann mit einem Datenspeicher versehen werden, der die gemessenen Daten speichert und mit den Werten weiterer Messungen vergleicht.

Der Messsensor ist ein Dichtesensor und ein Feuchtigkeitssensor. Der Dichtsensor kann eine radiometrische Sonde sein. Es kann aber auch jeder weitere Dichtesensor verwendet werden, der eine mit dem Verdichtungsprozess zeitgleiche Messung der Dichte des landwirtschaftlichen Gutes ermöglicht.

In einer bevorzugten Ausführungsform der Erfindung ist der Messsensor an einer Platte befestigt. Die Befestigung des Messsensors an einer Platte hat den Vorteil, dass die Oberfläche mit der der Messsensor auf dem landwirtschaftlichen Gut aufliegt, vergrößert wird, wodurch ein Einsinken des Messsensors in weiches Gut verhindert werden kann.

Die Dichtemessung des landwirtschaftlichen Gutes kann durch den Feuchtigkeitsgrad des Gutes beeinträchtigt werden. Daher misst ein zweiter Messsensor vorteilhafterweise die Feuchtigkeit des landwirtschaftlichen Gutes.

Der Dichtesensor und der Feuchtigkeitssensor sind derart an der Verdichtungsapparatur befestigt, dass sie zeitgleich mit dem Verdichten, zum Beispiel beim Überfahren des landwirtschaftlichen Gutes, dessen Dichte beziehungsweise dessen Feuchtigkeit messen. Die auf diese Weise gemessenen Werte werden an die Auswerteeinheit weitergeleitet und von dort an die Anzeigeeinheit. Dadurch wird der Benutzer der Verdichtungsapparatur während des Verdichtens darüber informiert, ob eine weitere Verdichtung notwendig ist.

Der Dichtesensor und der Feuchtigkeitssensor werden derart an der Verdichtungsapparatur befestigt, dass sie in Kontakt mit der Oberfläche des landwirtschaftlichen Gutes gebracht werden, es ist aber auch möglich die Sensoren bei der Messung berührungslos über die Oberfläche des Gutes zu führen.

Der Dichtesensor und der Feuchtigkeitssensor können als ein multifunktionaler Messsensor vorliegen.

Weiterhin ist es möglich weitere Parameter, wie zum Beispiel die Temperatur oder der Luftdruck, gemessen werden. Hierzu können weitere Messsensoren an die Auswerteeinheit angeschlossen werden.

In einer bevorzugten Ausführungsform der Erfindung ist eine Messeinheit zur Bestimmung der Position der Messung vorgesehen. Dies hat den Vorteil, dass bestimmt werden kann welche Stellen der Oberfläche bereits verdichtet wurden und welche nicht.

Weiter bevorzugt ist die Messeinheit ein Navigationssystem, das die Position der Messung bestimmt und an die Auswerteeinheit weiterleitet. Die Auswerteeinheit kann dann anhand der Positionsdaten berechnen, welche Stellen des landwirtschaftlichen Gutes bereits genügend verdichtet wurden und welche Stellen noch einer weiteren Verdichtung bedürfen.

Die Messeinheit ist vorzugsweise ein Wegemesssystem, ein Abstandsmesssystem oder ein Lagemesssystem.

Vorzugsweise sind zwei oder mehrere der genannten Messsysteme vorgesehen.

Die durch die Messsensoren und/oder Messeinheiten gemessenen Werte und durch die Auswerteeinheit mit dem Soll-Wert des landwirtschaftlichen Gutes verglichenen Werte sind vorzugsweise durch eine Anzeigeeinheit akustisch wiedergebbar oder visuell darstellbar. Anhand der durch die Messung der Dichte, der Feuchtigkeit und der Position gewonnenen Werte, ist eine Kartographierung der gesamten Oberfläche des landwirtschaftlichen Gutes möglich. Die auf diese Weise gewonnen Daten können auf der Anzeigeeinheit dargestellt werden und geben darüber Auskunft, welche Bereiche des landwirtschaftlichen Gutes verdichtet werden müssen und welche bereits der gewünschten Dichte entsprechen.

Die Dichtemessvorrichtung ist vorzugsweise in eine Verdichtungsapparatur eingebaut oder an ihr befestigt. Ein Verdichtungsfahrzeug kann bereits mit einer solchen Dichtemessvorrichtung ausgestattet sein, bei der sich ein Dichtesensor an der Unterseite des Fahrzeugs befindet.

Teile der Vorrichtung können aber auch in einer stationären Messwarte angeordnet sein. Diese Messwarte steht dann über Funk mit dem Verdichtungsfahrzeug in Kontakt.

Ebenso kann die Messung durch ein weiteres Fahrzeug durchgeführt werden. In einer weiteren Ausführungsform der Erfindung ist die Vorrichtung auf einem separaten Messfahrzeug befestigt. Bei dieser Ausführungsform fährt das Messfahrzeug über die Oberfläche des zu verdichtenden landwirtschaftlichen Gutes und sammelt Messdaten über die Beschaffenheit des Gutes. Die auf diese Weise gesammelten Daten werden online an die Auswerteeinheit weitergeleitet und über die Anzeigeeinheit dem Benutzer zugeführt. Die Anzeigeeinheit befindet sich dabei im oder an der Verdichtungsapparatur, während die Auswerteeinheit sowohl an der Verdichtungsapparatur als auch am Messfahrzeug angebracht sein kann.

Durch das Verfahren zur Messung der Verdichtung von landwirtschaftlichem Gut und durch die dazugehörige Dichtemessvorrichtung kann die Dichte von landwirtschaftlichem Gut bereits während des Verdichtungsvorgangs online gemessen werde. Das Verfahren und die Dichtemessvorrichtung kann demzufolge auch in anderen Bereichen verwendet werden, in der eine Dichtemessung während der Verdichtung benötigt wird.

Die Vorrichtung oder Teile der Vorrichtung sind vorzugsweise auf einem Gleitschuh angeordnet. Der Gleitschuh kann an ein Verdichtungsfahrzeug angehängt werden und ermöglicht, dass der Messsensor über das zu verdichtende bzw. bereits verdichtete landwirtschaftliche Gut geführt wird.

Der Gleitschuh ist dabei mittels einer Linearführung so mit der Verdichtungsapparatur verbunden, dass der Gleitschuh mitgeführt wird, sich aber gegenüber der Aufhängung an der Apparatur derart verschieben kann, dass er sich an die Gutoberfläche anpasst.

Im Folgenden wird die Erfindung anhand von Zeichnungen näher erläutert. Im Einzelnen zeigt
- Figur 1: einen Traktor zur Verdichtung mit einer Vorrichtung zur Messung der Dichte,
- Figur 2: eine schematische Darstellung der Vorrichtung,
- Figur 3: eine Skizze der Messsonde auf einer Platte,

- Figur 4: eine schematische Darstellung eines Gleitschuhs,
- Figur 5: ein Diagramm der Kalibrierung einer radiometrischen Sonde und
- Figur 6: ein Diagramm des Gasaustausches.

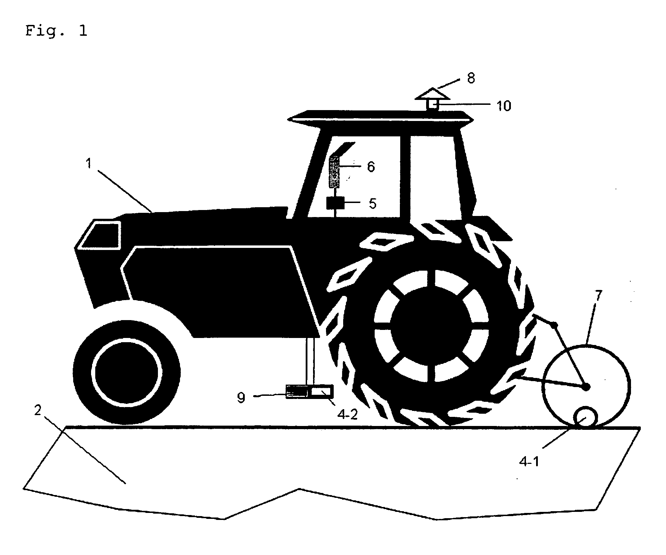

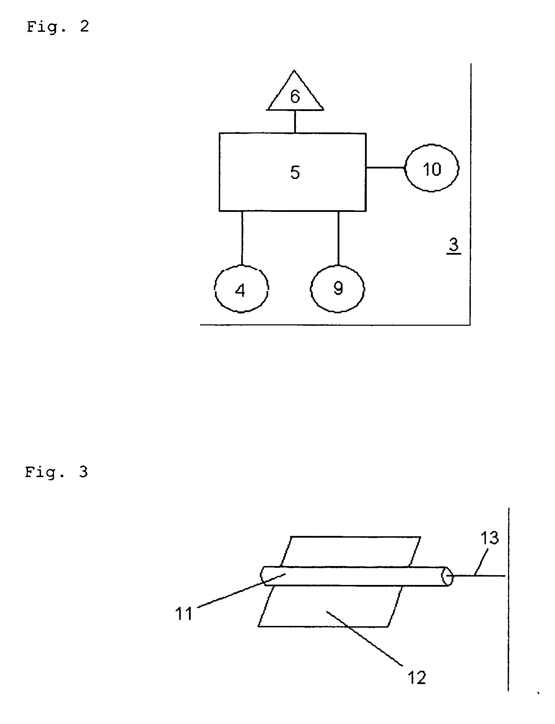

Die Figur 1 zeigt eine Verdichtungsapparatur 1, wie zum Beispiel einen Traktor, der zur Verdichtung eines landwirtschaftlichen Gutes 2, zum Beispiel eines Futterstocks, eingesetzt wird. In diesen Traktor ist eine Vorrichtung 3 (siehe Figur 2) zur Messung der Dichte eingebaut, die aus einem Dichtesensor 4, einer Auswerteeinheit 5 und einer Anzeigeeinheit 6 besteht. Die Auswerteeinheit 5 kann sowohl in den Dichtsensor 4 als auch in die Anzeigeeinheit 6 integriert sein. Es ist jedoch auch möglich, dass die Auswerteeinheit 5 ein eigenständiges Gerät ist, das zwischen Dichtesensor 4 und Anzeigeeinheit 6 geschaltet ist.

Zur Veranschaulichung ist der Traktor mit zwei Dichtesensoren 4-1 und 4-2 dargestellt.

Wird ein Dichtesensor 4-1 verwendet, dessen Funktionsprinzip den Kontakt mit dem Messgut erfordert, wird dieser zweckmäßigerweise in ein Messrad 7 eingebaut. Die Kontakt- und Messfläche des Dichtesensors 4-1 ist dabei in die Lauffläche des Messrades 7 eingepasst. Das Messrad 7 ist schwimmend am Traktor befestigt, damit es sich den Unebenheiten der Oberfläche des landwirtschaftlichen Gutes 2 anpassen kann und der Dichtesensor 4-1 mit der konstanten Kraft des Eigengewichtes des Messrades 7 auf das Gut 2 gedrückt wird. Soll keine Messung vorgenommen werden, ist es möglich, das Messrad 7 mit der Traktorhydraulik auszuheben. Das Messrad 7 kann vorn, hinten oder zwischen den Achsen am Traktor angebaut werden. Es kann auch mit einer speziellen Aushebevorrichtung verbunden sein, wenn eine Standardhydraulik an dem gewünschten Anbauort nicht zur Verfügung steht.

Da in dem dargestellten Beispiel der Dichtesensor 4-1 mit dem Messrad 7 umläuft, ist eine Messgröße immer nur im Abstand des Radumfangs zu gewinnen, wenn nicht mehrere Dichtesensoren 4-1 auf dem Umfang angeordnet werden.

Vorstellbar ist auch der Einbau des Dichtesensors 4-1 in einen Gleitschuh bzw. Schlitten, der über das landwirtschaftliche Gut 2 gleitet oder mittels einer speziellen Aufhängung aktiv an der Oberfläche geführt wird. Durch geeignete Maßnahmen ist dann aber sicher zu stellen, dass sich der Gleitschuh bzw. Schlitten nicht in das landwirtschaftliche Gut 2 bohrt oder das Gut 2 vor sich herschiebt.

Der Dichtesensor 4-1 wird über einen geeigneten Strom-überträger, zum Beispiel einen Schleifring aus dem Bordnetz des Traktors mit Strom versorgt. Die gemessenen Werte werden direkt oder per Funk an eine Auswerteeinheit 5 mit Anzeigeeinheit 6 (z.B. Display bzw. Bildschirm) in die Traktorkabine übertragen. Die gemessene Dichte kann digital oder analog, zum Beispiel in Farbabstufungen dargestellt werden. Gewöhnlich wird die Dichte an der Stelle angezeigt, an der sich das Messrad 8 gerade befindet und die Messung erfolgt. Es ist aber auch möglich, ein Navigationssignal (z.B. GPS) über die Antenne 8 eines Navigationssystems 10 zu empfangen, in der Auswerteeinheit 5 mit dem Dichtesignal zu verknüpfen und so die Dichtewerte über dem Siloquerschnitt darzustellen. Zur Lagebestimmung kann auch ein Signal verwendet werden, das von einem bekannten Abstandssensor am Traktor oder von der Bordelektronik geliefert wird. Denkbar ist auch, die gemessenen Dichtewerte nicht in der Fläche, sondern entlang einer Fahrspur, d.h. entlang einer Linie darzustellen.

Berührungslose Dichtesensoren 4-2, die ein Messsignal ohne Gutberührung gewinnen, können an geeigneter Stelle am Traktor gemäß der Darstellung in der Zeichnung montiert werden und erfordern keine gesonderte Vorrichtung zur Herstellung des Kontaktes mit dem landwirtschaftlichen Gut 2.

Es können auch Dichtesensoren 4 verwendet werden, die zusätzlich zur Dichte die Feuchtigkeit messen. Es ist aber auch möglich, dass ein Feuchtigkeitssensor 9 als separater eingeständiger Sensor verwendet wird. Dieser Feuchtigkeitssensor 9 kann mit und ohne Kontakt zur Oberfläche die Feuchtigkeit des landwirtschaftlichen Gutes 2 messen.

Weiterhin kann die Auswerteeinheit 5 mit einem Speicher zur Aufzeichnung der gemessen Daten versehen sein. Dies ermöglicht einen Vergleich der genommenen Daten mit früheren Messungen.

Futtersilos werden nach ungefähr einem Jahr geleert. Deshalb können die Daten ausgelesen werden und extern gespeichert werden, um somit jederzeit einen Überblick auf den Zustand in den Silos zu geben.

Die Vorrichtung 3 kann an allen Verdichtungsfahrzeugen oder Geräten eingesetzt werden, mit denen landwirtschaftliche Güter 2 auf Freiflächen, in Hallen oder in Horizontalsilos zur Konservierung verdichtet werden, wie Traktoren, Radlader, Vibrationswalzen oder ähnliches. Eine Verwendung des erfindungsgemäßen Verfahrens bzw. der Vorrichtung 3 bei der Verdichtung sonstiger Stoffe oder Untergründe ist ebenfalls denkbar.

Die Figur 2 zeigt eine Vorrichtung 3 mit der durch einen Dichtesensor 4 die Dichte eines landwirtschaftlichen Gutes 2 gemessen werden kann. Zusätzlich zur Dichte kann mit dem Feuchtigkeitssensor 9 die Feuchtigkeit des landwirtschaftlichen Gutes 2 bestimmt werden. Die von dem Dichtesensor 4 und dem Feuchtigkeitssensor 9 gemessenen Werte werden an eine Auswerteeinheit 5 weitergeleitet. Zusätzlich kann auch durch ein Navigationssystem 10 die Position bestimmt werden. Die durch dass Navigationssystem 10 bestimmten Positionsdaten werden ebenfalls an die Auswerteeinheit 5 weitergeleitet.

In der Auswerteeinheit 5 werden die gemessenen Werte mit denen für das vorliegende landwirtschaftliche Gut 2 spezifischen Soll-Werten verglichen. Die Auswerteeinheit 5 gibt Daten an eine Anzeigeeinheit 6 weiter. Mit der Anzeigeeinheit 6 können die ermittelten Daten auf einem Bildschirm visualisiert werden beziehungsweise durch akustische Signale wiedergegeben werden.

Zur Dichtebestimmung können radiometrische Verfahren mit Gamma-Absorptions- bzw. Gamma-Streuanordnungen verwendet werden. Gamma-Rückstreusonden sind Einstabsonden 11, bei denen die radioaktive Strahlungsquelle und der Detektor innerhalb eines Rohres angeordnet sind. Zwischen radioaktiver Strahlenquelle und Detektor befindet sich ein Absorber mit möglichst hoher Dichte, der den Detektor vor direkter Strahlung abschirmt. Das Messprinzip der Gamma-Rückstreusonde beruht auf der Wechselwirkung der Gamma-Quanten mit dem umliegenden Material. Die Anzahl der vom Detektor registrierten Gamma-Quanten ergibt sich als Funktion der Dichte des auszumessenden Materials und durchläuft ein Maximum. In Abhängigkeit von der Quell-Detektor-Anordnung sowie der Wahl der radioaktiven Strahlungsquelle(-energie) ergeben sich die Lage des Maximums, das Messvolumen, der Messbereiche und die Empfindlichkeit.

Figur 3 zeigt eine Einstabsonde 11 (Messrohr), die für den Einsatz im Silo auf einer Platte 12 angebracht ist, mit der die Messsonde 18 auf der Silooberfläche aufliegt. Die Einstabsonde 11 ist dabei durch ein Verbindungskabel 13 mit der Auswerteeinheit 5 verbunden. Als Quelle wird Cäsium 137 mit einer Aktivität von 75 MBq verwendet. Das Messrohr kann auch in einen Gleitschuh eingebaut werden.

Damit Beschädigungen der Messsonde 18 vermieden können kann die Messsonde 18 auch in einem Gleitschuh 14 über das landwirtschaftliche Gut 2 geführt werden.

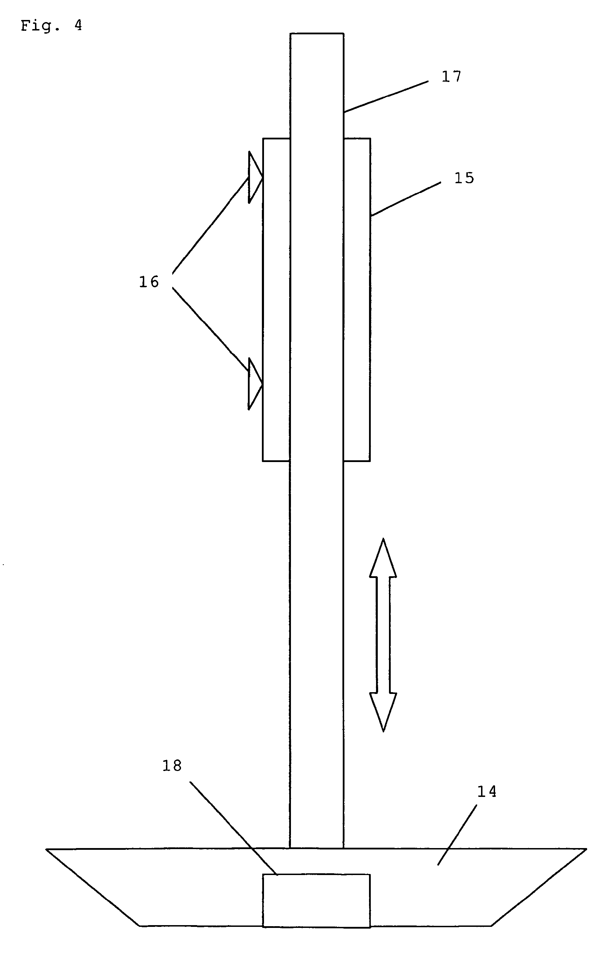

Die Figur 4 zeigt eine schematische Darstellung eines Gleitschuhs 14 in dem die Messsonde 18 angebracht ist. Der Abstand des Gleitschuhs 14 vom landwirtschaftlichen Gut 2 kann variiert werden. Hierzu besitzt der Gleitschuh 14 eine Linearführung mit einer Führungsstange 17, die in eine Führung 15 greift. In der Führung 15 ist die Führungsstange 17 verschiebbar. Außerdem ist an der Führung 15 eine Befestigung 16 angebracht, mit der die Vorrichtung an eine Verdichtungsapparatur 1 fixiert werden kann.

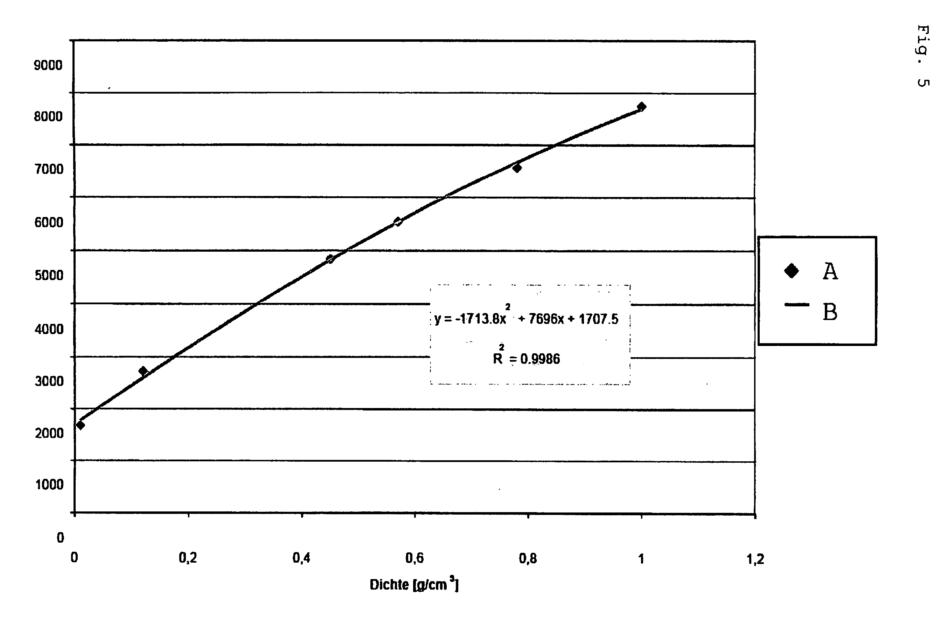

Figur 5 zeigt ein Diagramm der Kalibrierung einer radiometrischen Stabsonde mit einer Platte 12(A = Impulsrate min⁻¹, B = polynomisch Impulsrate min⁻¹. Als Quelle wurde Cäsium 137 mit einer Aktivität von 75 MBq verwendet.

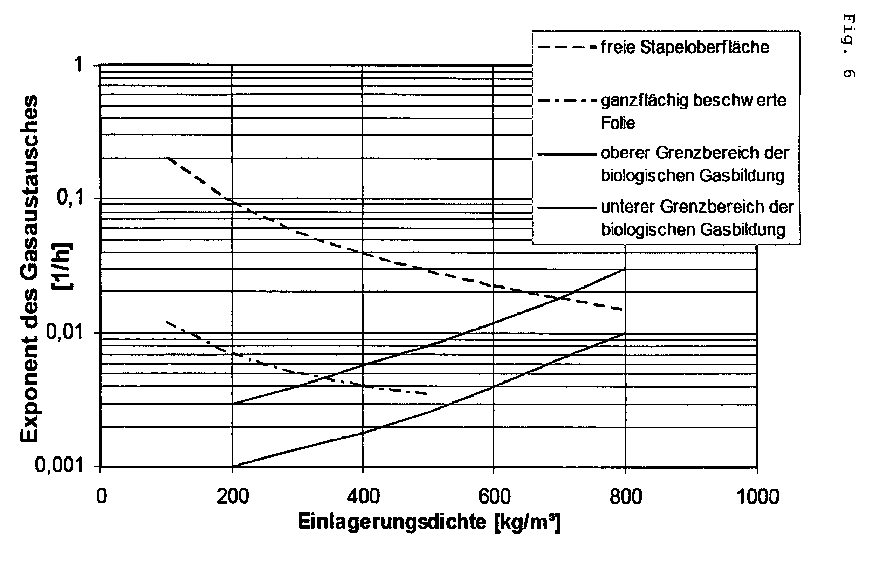

In der Figur 6 wird ein Diagramm gezeigt, bei dem der Exponent des Gasaustausches und der Gasbildung in Abhängigkeit von der Einlagerungsdichte der Originalsubstanz des Siliergutes bei freier und mit Folie zugedeckter Siliergutoberfläche aufgetragen ist.

Die Dichte des Siliergutes hat bei der Einlagerung einen ganz wesentlichen Einfluss auf den Siliererfolg. Bei geringen Dichten ist der Porenanteil im landwirtschaftlichen Gut 2 höher. Dies fördert den Gasaustausch und die Wärmeentwicklung. Als Kriterium für die Höhe der einlagerungsdichte der Originalsubstanz gilt, dass der Gasaustausch nicht größer sein darf als die Gasbildung im Siliergut. Dies bedeutet, dass für angewelktes Siliergut bei freier Siliergutoberfläche ohne Zudeckung eine Dichte >750 kg OS/m³ vorhanden sein muss (OS = Originalsubstanz). Da dies in der Praxis nicht zu erreichen ist, wird der äußere Luftabschluss durch Zudecken mit Folie hergestellt. Bei ganzflächig beschwerter Folie ist nur noch eine Einlagerungsdichte von 400-500 kg OS/m³ nötig (siehe Figur 6).

Die Forderungen an die Einlagerungsdichte von Grashäcksel in Abhängigkeit vom Trockenmassegehalt (TM) bei einem Gasaustausch von 20 l/m²h ist in der folgenden Tabelle dargestellt.

| **Trockenmassegehalt (in %)** | **Trockenmassedichte (in kg TM/m³)** |
|---|---|
| 30 | 200 |
| 40 | 230 |
| 50 | 250 |

Die Lagerungsdichten hängen vor allem von den wirkenden statischen Drücken und von den physikalischen Eigenschaften des Siliergutes ab. Einen entscheidenden Einfluss besitzen der Trockenmassegehalt (TM), die Biegefestigkeit der Blätter und Stängel und die Häcksellänge.

### Bezugszeichenliste:

- 1: Verdichtungsapparatur
- 2: (landwirtschaftliches) Gut
- 3: Vorrichtung
- 4: Dichtesensor
- 4-1: Dichtesensor(mit Kontakt zum Boden)
- 4-2: berührungsloser Dichtesensor (ohne Kontakt zum Boden)
- 5: Auswerteeinheit
- 6: Anzeigeeinheit
- 7: Messrad
- 8: Antenne des Navigationssystems
- 9: Feuchtigkeitssensor
- 10: Navigationssystem
- 11: Einstabsonde
- 12: Platte
- 13: Verbindungskabel
- 14: Gleitschuh
- 15: Führung
- 16: Befestigung am Traktor
- 17: Führungsstange
- 18: Messsonde

## Patentansprüche

1. Verfahren zur Messung der mechanischen Verdichtung in der Tiefe eines landwirtschaftlichen Gutes (2), wobei man die folgenden Schritte ausführt:
a) lagenweises Einbringen des landwirtschaftlichen Gutes (2) in Silos, auf Freiflächen oder in Hallen;
b) mechanisches Verdichten des landwirtschaftlichen Gutes (2) mittels Überfahren mit einem Fahrzeug (1);
c) kontinuierliches oder diskontinuierliches Messen der Dichte des landwirtschaftlichen Gutes (2),
wobei der Schritt des Verdichtens und der Schritt des Messens der Dichte gleichzeitig während des fortgesetzten Verdichtens des landwirtschaftlichen Gutes erfolgt, wobei außerdem die Feuchtigkert des landwirtschaftlichen Gutes bestimmt wird und die Messdaten der Dichte und der Feuchte an eine Auswerteeinheit (5) weitergeleitet werden, wobei auf einer Anzeigeeinheit (6) die Dichte unter Berücksichtigung der Feuchte dargestellt wird.

2. Verfahren nach Anspruch 1, **dadurch gekennzeichnet, dass** man die Dichte an der Oberfläche bis in eine Tiefe von 30 cm des landwirtschaftlichen Gutes misst.

3. Verfahren nach Anspruch 1, **dadurch gekennzeichnet, dass** man in der Auswerteeinheit (5) die Messwerte mit dem Soll-Wert des landwirtschaftlichen Gutes (2) unter Berücksichtigung der Feuchtigkeit des landwirtschaftlichen Gutes (2) vergleicht und die Abweichung an die Anzeigeeinheit (6) weiterleitet.

4. Verfahren nach einem der Ansprüche 1 bis 3, **dadurch gekennzeichnet, dass** man die Position, an der ein Messwert genommen wird, bestimmt und diesen Positionswert an die Auswerteeinheit (5) weiterleitet.

5. Verfahren nach einem der Ansprüche 1 bis 4, **dadurch gekennzeichnet, dass** die Anzeigeeinheit (6) die Dichte des landwirtschaftlichen Gutes (2) akustisch wiedergibt und/oder visuell darstellt.

6. Vorrichtung (3) zur Durchführung des Verfahrens nach einem der vorhergehenden Ansprüche, bestehend aus mindestens einem Messsensor (18) und mindestens einer Anzeigeeinheit (6), die mit einer Auswerteeinheit (5) verbunden sind,
**dadurch gekennzeichnet, dass** der Messsensor (18) ein Dichtesensor (4), und ein Feuchtigkeitssensor (9) ist.

7. Vorrichtung (3) nach Anspruch 6, **dadurch gekennzeichnet, dass** der Messsensor (18) an einer Platte (12) befestigt ist.

8. Vorrichtung nach einem der Ansprüche 6 bis 7, **dadurch gekennzeichnet, dass** eine Messeinheit zur Bestimmung der Position der Messung vorgesehen ist.

9. Vorrichtung (3) nach Anspruch 8, **dadurch gekennzeichnet, dass** die Messeinheit ein Navigationssystem (10) ist, das die Position der Messung bestimmt und an die Auswerteeinheit (5) weiterleitet.

10. Vorrichtung (3) nach Anspruch 8, **dadurch gekennzeichnet, dass** die Messeinheit ein Wegemesssystem, ein Abstandsmesssystem oder ein Lagemesssystem ist.

11. Vorrichtung (3) nach einem der Ansprüche 8 bis 10 **dadurch gekennzeichnet, dass** zwei oder mehrere der genannten Messsysteme vorgesehen sind.

12. Vorrichtung (3) nach einem der Ansprüche 6 bis 11, **dadurch gekennzeichnet, dass** die durch den Messsensor (18) und/oder Messeinheit gemessenen Werte und durch die Auswerteeinheit (5) mit dem Soll-Wert des landwirtschaftlichen Gutes (2) verglichenen Werte durch eine Anzeigeeinheit (6) akustisch wiedergebbar und/oder akustisch darstellbar sind.

13. Vorrichtung (3) nach einem der Ansprüche 6 bis 12, **dadurch gekennzeichnet, dass** sie in eine Verdichtungsapparatur (1) eingebaut ist oder an ihr befestigt ist.

14. Vorrichtung (3) nach Anspruch 13, **dadurch gekennzeichnet, dass** einzelne Teile der Vorrichtung (3) an der Verdichtungsapparatur (1) angebracht sind während die übrigen Teile der Verdichtungsapparatur (1) in einer stationären Messwarte angeordnet sind.

15. Vorrichtung (3) nach einem der Ansprüche 6 bis 14, **dadurch gekennzeichnet, dass** die Vorrichtung (3) auf einem separaten Messfahrzeug befestigt ist.

16. Vorrichtung (3) nach einem der Ansprüche 6 bis 15, **dadurch gekennzeichnet, dass** die Vorrichtung (3) oder Teile der Vorrichtung auf einem Gleitschuh (14) angeordnet sind.

## Claims

1. A process for measuring the mechanical compaction in the depth of an agricultural material (2), wherein the following steps are performed:
a) introducing the agricultural material (2) in layers in silos, on open surfaces, or in halls;
b) mechanically compacting of the agricultural material (2) by means of driving over it with a vehicle (1) ;
c) measuring the density of the agricultural material (2) continuously or discontinuously,
wherein the step of compacting and the step of measuring of the density are conducted at the same time during the ongoing compaction of the agricultural material,
wherein furthermore the moisture of the agricultural material is determined, and the measured data of the density and of the moisture are conveyed to an evaluating unit (5), and wherein the density is displayed on a display unit (6), taking into consideration the moisture.

2. The process according to claim 1, **characterized in that** the density is measured on the surface of the agricultural material down to a depth of 30 cm of the agricultural material.

3. The process according claim 1, **characterized in that** in the evaluating unit (5), the measured values are compared with a specified value of the agricultural material (2), taking into consideration the moisture of the agricultural material (2), and the deviation is conveyed to the display unit (6).

4. The process according to any of the claims 1 to 3, **characterized in that** the position at which a measured value is recorded is determined and this positional value is conveyed to the evaluating unit (5).

5. The process according to any of the claims 1 to 4, **characterized in that** the display unit (6) indicates the density of the agricultural material (2) acoustically and/or displays it visually.

6. A device (3) for carrying out the process according to any of the preceding claims, consisting of at least one measuring sensor (18) and at least one display unit (6), which are connected to an evaluating unit,
**characterized in that** the measuring sensor (18) is a density sensor (4) and a moisture sensor (9).

7. The device (3) according to claim 6, **characterized in that** the measuring sensor (18) is fastened to a plate (12) .

8. The device (3) according to any of the claims 6 to 7, **characterized in that** a measuring unit is provided for the determination of the position of the measurement.

9. The device according to claim 8, **characterized in that** the measuring unit is a navigation system (10), which determines the position of the measurement and conveys it to the evaluating unit (5).

10. The device (3) according to claim 8, **characterized in that** the measuring unit is a path measurement system, a distance measurement system, or a position measurement system.

11. The device (1) according to any of claims 8 to 10, **characterized in that** two or more of the measurement systems mentioned are provided.

12. The device (3) according to any of claims 6 to 11, **characterized in that** the values measured by the measuring sensor (18) and/or the measuring unit and compared with the specified value of the agricultural material (2) by the evaluating unit (5) can be indicated acoustically by a display unit and/or can be displayed acoustically.

13. The device (3) according to any of claims 6 to 12, **characterized in that** it is installed in a compacting apparatus (1) or is fastened to it.

14. The device (3) according to claim 13, **characterized in that** individual parts of the device (3) are attached to the compacting apparatus (1), while the remaining parts of the compacting apparatus (1) are arranged in a stationary measuring station.

15. The device (3) according to any of claims 6 to 14, **characterized in that** the device (3) is fastened to a separate measuring vehicle.

16. The device (3) according to any of claims 6 to 15, **characterized in that** the device (3) or parts of the device are arranged on a runner (14).

## Revendications

1. Procédé de mesure du compactage mécanique en profondeur d'un produit agricole (2), dans lequel on effectue les étapes suivantes :
a) mise en place du produit agricole (2), par couches, dans des silos, sur des aires dégagées ou dans des hangars ;
b) compactage mécanique du produit agricole (2) en passant pardessus avec un véhicule (1) ;
c) mesure continue ou discontinue de la densité du produit agricole (2),
l'étape de compactage et l'étape de mesure de la densité s'effectuant simultanément tout en poursuivant le compactage du produit agricole,
et on détermine en outre l'humidité du produit agricole et on transmet les mesures de densité et d'humidité à une unité d'évaluation (5), la densité, en tenant compte de l'humidité, étant présentée sur une unité d'affichage (6).

2. Procédé selon la revendication 1, **caractérisé en ce que** l'on mesure la densité à la surface jusqu'à une profondeur de 30 cm du produit agricole.

3. Procédé selon la revendication 1, **caractérisé en ce que** l'on compare les mesures dans l'unité d'évaluation (5) avec la valeur de consigne du produit agricole (2) en tenant compte de l'humidité du produit agricole (2), et on transmet l'écart à l'unité d'affichage (6).

4. Procédé selon l'une des revendications 1 à 3, **caractérisé en ce que** l'on détermine la position à laquelle on effectue une mesure et on transmet cette valeur de position à l'unité d'évaluation (5).

5. Procédé selon l'une des revendications 1 à 4, **caractérisé en ce que** l'unité d'affichage (6) restitue acoustiquement la densité du produit agricole (2) et/ou la représente visuellement.

6. Dispositif (3) pour la mise en oeuvre du procédé selon l'une des revendications précédentes, comprenant au moins un capteur de mesure (18) et au moins une unité d'affichage (6) reliée à une unité d'évaluation (5), **caractérisé en ce que** le capteur de mesure (18) est un capteur de densité (4) et un capteur d'humidité (9).

7. Dispositif (3) selon la revendication 6, **caractérisé en ce que** le capteur de mesure (18) est fixé sur une plaque (12).

8. Dispositif selon l'une des revendications 6 à 7, **caractérisé en ce qu'**il est prévu une unité de mesure pour déterminer la position de la mesure.

9. Dispositif (3) selon la revendication 8, **caractérisé en ce que** l'unité de mesure est un système de navigation (10) qui détermine la position de la mesure et la transmet à l'unité d'évaluation (5).

10. Dispositif (3) selon la revendication 8, **caractérisé en ce que** l'unité de mesure est un système de mesure de déplacement, un système de mesure de distance ou un système de mesure de position.

11. Dispositif (3) selon l'une des revendications 8 à 10, **caractérisé en ce que** deux ou plusieurs desdits systèmes de mesure sont prévus.

12. Dispositif (3) selon l'une des revendications 6 à 11, **caractérisé en ce que** les valeurs mesurées par le capteur de mesure (18) et/ou l'unité de mesure et les valeurs comparées par l'unité d'évaluation (5) avec la valeur de consigne du produit agricole (2) sont susceptibles d'être restituées acoustiquement et/ou représentées acoustiquement.

13. Dispositif (3) selon l'une des revendications 6 à 12, **caractérisé en ce qu'**il est embarqué dans un équipement de compactage (1) ou est fixé sur celui-ci.

14. Dispositif (3) selon la revendication 13, **caractérisé en ce que** différentes parties du dispositif (3) sont installées sur l'équipement de compactage (1) tandis que les autres parties de l'équipement de compactage (1) sont disposées dans un poste de mesure stationnaire.

15. Dispositif (3) selon l'une des revendications 6 à 14, **caractérisé en ce que** le dispositif (3) est fixé sur un véhicule de mesure séparé.

16. Dispositif (3) selon l'une des revendications 6 à 15, **caractérisé en ce que** le dispositif (3) ou des parties du dispositif sont agencées sur un patin coulissant (14).
